# EUROPEAN PATENT APPLICATION

(11) **EP 2 903 347 A1**
(43) Date of publication of application: **05.08.2015**
(21) Application number: 13841677.1
(22) Date of filing: 23.08.2013
(51) Int. Cl.: H04W 40/02, H04W 76/02, H04W 84/18

(54) **NETWORK, NETWORK NODE, DISTRIBUTION METHOD, AND NETWORK NODE PROGRAM**

(30) Priority: 27.09.2012 JP 2012214172
(71) Applicant: NEC Corporation, Tokyo 108-8001 (JP)
(72) Inventor: FUJITA Norihito, Tokyo 108-8001 (JP); UEDA Hirofumi, Tokyo 108-8001 (JP)
(74) Representative: MacDougall, Alan John Shaw
(86) International application number: PCT/JP2013/072511
(87) International publication number: WO 2014/050386

(57) **Abstract**

Provided is a network node which is capable of achieving both of not excessively increasing the communication load in a network, and avoiding, as much as possible, failure of delivering data to an objective node, which is the distribution destination. The network node includes nonstructural distribution means for distributing data according to a nonstructural distribution in a network in which the nonstructural distribution can be performed, structure-type distribution means for distributing data according to a structure-type distribution using a link for the structure-type distribution established in the network, and selection means for selecting the structure-type distribution means or the nonstructural distribution means as broadcast distribution means by using a predetermined evaluation method, wherein the structure-type distribution means or the nonstructural distribution means selected as the broadcast distribution means by the selection means is used to distribute data in the network.

## Description

### [Technical Field]

The present invention relates to a network in which nonstructural distribution can be performed, a network node which is a constituent element of the network, a distribution method performed by the network node, and a program for the network node used on the network node.

### [Background Art]

Normally, broadcast distribution is performed in a hierarchized ad hoc network, and in particular, data are broadcast and distributed on a hierarchical ad hoc network constituted of nodes connected by wireless links.

A mechanism for performing broadcast distribution and sharing data among nodes (terminals) connected by wireless links has been usually used in a wide range of applications. For example, when each node broadcasts and distributes positional information of the node itself to another node which is existing in a network, the nodes in the network can share the positional information each other. In addition, it is possible to consider many forms of usages such as performing broadcast distribution and sharing information provided by sensors (such as a temperature, a power consumption, and the like) equipped in each node.

The connection state between nodes based on wireless link may not be necessarily stable because the radio wave condition changes in accordance with movement of nodes or disturbance. For this reason, a communication method which is referred to as DTN (Delay/Disruption-Tolerant Network) has been proposed to enable highly reliable communication even when the connection between the nodes is unstable.

As described in NPL(Non-Patent Literature) 1, a method based on epidemic distribution is disclosed as a broadcast distribution method in the DTN.

The epidemic distribution is characterized in synchronizing information by using a summary vector (hereinafter abbreviated as SV) which is a message for notifying information summarizing data held in each node (data which are to be shared). When each node in a network detects another node coming into proximity, the nodes exchange SVs with each other and check the contents of the SVs of the adjacent nodes. When the node detects data that are not held in the own node, the node requests the adjacent node to send the data to obtain the data. In the epidemic distribution, the data to be shared are propagated to all over the network by repeating this operation.

A problem of the epidemic distribution is the lack of scalability. As described above, the data to be shared are propagated to all over the network, and therefore, in a case that an amount of data to be shared in the entire network is large, or a case that a number of nodes in the network is large, the amount of message data to be transferred and shared becomes a problem.

An SV is transmitted in response to detection of an adjacent node or difference in the held data. Accordingly, when many nodes are locally gathered within a propagation distance from each other, message data are transmitted and received redundantly like broadcast distribution based on flooding. The amount of traffic thereof is, at most, proportional to a square of the number of nodes locally gathered. Therefore, the epidemic distribution may not be highly scalable method of broadcast distribution, in some cases.

Therefore, there is another method which is described in PTL 1 for performing broadcast distribution in a scalable manner.

PTL 1 discloses, as a method of multicasting on a TCP/IP network, a method of making a logical network in a tree structure on a physical topology and performing broadcast distribution on the tree structure (tree-type distribution).

An advantage of tree-type distribution is that message data are not transmitted or received redundantly unlike flooding and epidemic distribution. Therefore, the amount of traffic required for broadcast distribution is as much as the amount proportional to the number of nodes, and this enables efficient broadcast distribution.

However, such tree-type distribution is premised on the assurance of end-to-end connectivity in the topology of the network. For this reason, such tree-type distribution may not be necessarily applicable to circumstances where the end-to-end connectivity is not ensured, which the DTN is based upon.

PTL 2 discloses a method of dividing a wireless ad hoc network into multiple clusters and transmitting data. As shown in Fig. 3, the method of PTL 2 is capable of making a hierarchical structure by designating a representing node (cluster head) in each cluster and further configuring a cluster made up with representing nodes in a recursive manner.

The method disclosed in PTL 2 is premised on the assurance of the end-to-end connectivity just like the tree-type distribution of PTL 1. For this reason, the method disclosed in PTL 2 may not be necessarily applicable to circumstances where the end-to-end connectivity is not ensured, which the DTN is based upon. However, as an example of application of configuring clusters as described above, it may be possible to consider reducing the amount of traffic, required for the broadcast distribution, by limiting the range of broadcast distribution within a cluster which is in a section where the wireless link connection is stable. As an example of application of configuring a hierarchical structure, it may be possible to consider performing broadcast distribution along a hierarchical tree made between cluster heads.

### [Citation List]

### [Patent Literature]

[PTL 1] Japanese Laid-Open Patent Publication No. 2006-222987
[PTL 2] Published Japanese Translation of PCT International Publication for Patent Application No. 2005-524357
[PTL 3] Japanese Laid-Open Patent Publication No. 2003-078530
[PTL 4] Japanese Laid-Open Patent Publication No. 2007-36397

### [Non Patent Literature]

[NPL 1] A. Vahdat, D. Becker, "Epidemic Routing for Partially-Connected Ad Hoc Networks" Tech. Report CS-200006, Duke University, Apr. 2000.
[NPL 2] Shu Du, Ahamed Khan, Santashil Palchaudhuri, Ansley Post, Amit Kumar Saha, Peter Druschel, David B. Johnson, Rudolf Riedi, "Safari: Self-Organizing Hierarchical Architecture for Scalable Ad Hoc Networking, " In ACM Ad Hoc Networks, Vol. 6, Iss. 4, pp 4

### [Summary of Invention]

### [Technical Problem]

As described in the Background Art, it may be possible to consider several candidates as means for performing broadcast distribution in DTN.

More specifically, the epidemic distribution is effective for performing highly reliable broadcast distribution even under a situation where the connections of the links are unstable. However, as described above, the epidemic distribution has a problem in that the amount of traffic is high. The amount of traffic of the epidemic distribution is proportional to a square of the number of nodes of distribution destinations at most, and therefore, it is not efficient to perform the epidemic distribution to a distant node.

In a section where the wireless link connection is stable, it is effective to perform broadcast distribution based on tree-type distribution. One of promising approaches for making a tree for tree-type distribution is configuring a hierarchical structure. However, as described above, the tree-type distribution is premised on the assurance of the end-to-end connectivity in the topology of the network. Therefore, in a case where there is no assurance for such connectivity, data may not reach the target node, which is the destination of the distribution, even if tree-type distribution is performed.

PTL 3 discloses a technique for the purpose of realizing an efficient routing control in a flat-type autonomous distributed wireless network in which wireless communication apparatuses are in an equal relationship with each other without having any hierarchical structure. In the technique disclosed in PTL 3, the wireless communication apparatuses are made into clusters, and each wireless communication apparatus searches a route on the basis of network line quality when the destination of a message is a wireless communication apparatus within the cluster, and determines a relay destination. In the technique disclosed in PTL 3, each wireless communication apparatus determines a relay destination on the basis of the number of relays, when the destination of a message is a wireless communication apparatus outside of the cluster. In this technique, information used for determining the relay destination is different according to whether a wireless communication apparatus of destination of a message is within the cluster or outside of the cluster. However, in both of the cases, the relay method disclosed in PTL 3 is autonomous distributed-type method. In particular, the technique disclosed in PTL 3 avoids introduction of a hierarchical structure into a network. Therefore, the technique disclosed in PTL 3 also avoids introduction of a hierarchical structure for clusters.

PTL 4 discloses a technique for providing a routing management table in each node in order to transmit an emergency message from any given node to a particular node in an ad hoc network. The emergency message is routed according to the routing management table, and the other messages are distributed according to a normal protocol for the ad hoc network. Therefore, each node simply switches the transmission mode according to only the distinction as to whether a message is an emergency message or other messages.

The present invention is made in view of the above problems. An object of the present invention is to provide a network, a network node, a distribution method, and a program for the network node capable of not excessively increasing the amount of communication in the network and avoiding, as much as possible, failure of delivering data to an objective node, which is the destination.

### [Solution to Problem]

According to a first aspect of the present invention, a network node is provided, which includes nonstructural distribution means for distributing data according to a nonstructural distribution in a network in which the nonstructural distribution can be performed, structure-type distribution means for distributing data according to a structure-type distribution using a link for the structure-type distribution established in the network, and selection means for selecting the structure-type distribution means or the nonstructural distribution means as broadcast distribution means by using a predetermined evaluation method, wherein the structure-type distribution means or the nonstructural distribution means selected as the broadcast distribution means by the selection means is used to distribute data in the network.

According to a second aspect of the present invention, a distribution method performed by a network node is provided, which includes a selection step of selecting, as broadcast distribution means, a structure-type distribution means for distributing data according to a nonstructural distribution in a network in which the nonstructural distribution can be performed by using a predetermined evaluation method and a nonstructural distribution means for distributing data according to a structure-type distribution using a link for the structure-type distribution established in the network, and a distribution step of distributing data in the network by using the structure-type distribution means or the nonstructural distribution means selected as the broadcast distribution means in the selection step.

Further, according to a third aspect of the present invention, a program for a network node is provided, which causes a computer to function as the network node, the program causing the computer to function as nonstructural distribution means for distributing data according to a nonstructural distribution in a network in which the nonstructural distribution can be performed, structure-type distribution means for distributing data according to a structure-type distribution using a link for the structure-type distribution established in the network, and selection means for selecting the structure-type distribution means or the nonstructural distribution means as broadcast distribution means by using a predetermined evaluation method, wherein the network node distributes data in the network by using the structure-type distribution means or the nonstructural distribution means selected as the broadcast distribution means by the selection means.

Further, according to a fourth aspect of the present invention, a network is provided, which includes a plurality of network nodes, wherein each of at least some of the network nodes is the network node described above.

### [Advantageous Effects of Invention]

According to the present invention, it is possible to achieve both of not excessively increasing the amount of communication in a network, and avoiding, as much as possible, failure of delivering data to an objective node, which is the destination of the distribution.

### [Brief Description of Drawings]

[Fig. 1] Fig. 1 is a block diagram illustrating a configuration of a first exemplary embodiment of the present invention.
[Fig. 2] Fig. 2 is a figure illustrating a hierarchical structure according to the first exemplary embodiment of the present invention.
[Fig. 3] Fig. 3 is a figure illustrating a tree structure according to the first exemplary embodiment of the present invention.
[Fig. 4] Fig. 4 is an example of three types of distribution policy setting tables according to the first exemplary embodiment of the present invention.
[Fig. 5] Fig. 5 is an example of a hierarchical structure table according to the first exemplary embodiment of the present invention.
[Fig. 6] Fig. 6 is a flowchart according to the first exemplary embodiment of the present invention.
[Fig. 7] Fig. 7 is a block diagram illustrating a configuration of a second exemplary embodiment of the present invention.
[Fig. 8] Fig. 8 is an example of a distribution policy setting table according to the second exemplary embodiment of the present invention.
[Fig. 9] Fig. 9 is a flowchart according to the second exemplary embodiment of the present invention.

### [Description of Embodiments]

In the present exemplary embodiment, each network node selectively uses two or more broadcast distribution means in a DTN, according to the situations. In order to selectively use two or more broadcast distribution means, each network node does not employ only a simple solution method of, e.g., choosing any one of epidemic distribution means and tree-type distribution means. And each network node resolves a supplementary parameter for each broadcast distribution means in accordance with a consistent method on every occasion.

### [First exemplary embodiment]

Subsequently, the first exemplary embodiment of the present invention will be explained in details with reference to drawings.

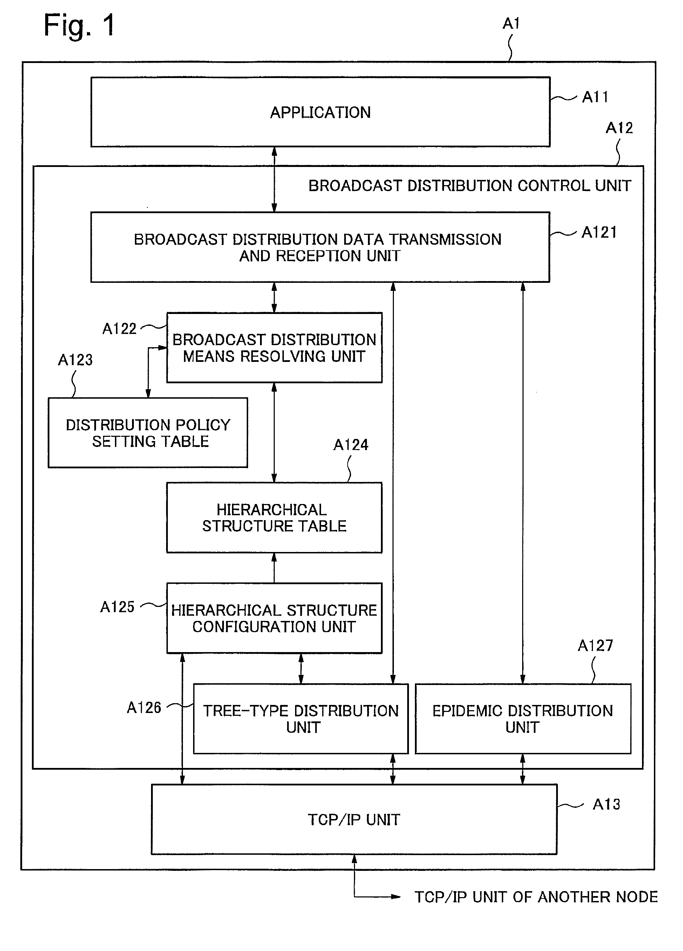

As shown in Fig. 1, the first exemplary embodiment of the present invention includes a node A1. The node A1 is a communication device connected to a network by a wireless link. The node A1 may be a communication terminal, such as a PC (Personal Computer) and a smartphone, executing applications within the node A1 itself. Alternatively, the node A1 may be a communication apparatus, such as an access point, relaying communication from an application executed on a terminal under the control of the communication apparatus. In the explanation below, a case, where the node A1 is a communication terminal, will be hereinafter explained.

The node A1 includes an application A11, a broadcast distribution control unit A12, and a TCP/IP (Transmission Control Protocol/Internet Protocol) unit A13.

The application A11 is an application for performing broadcast distribution. The application A11 is considered to be, for example, an application for broadcasting and distributing data to be shared with another node, such as positional information, sensor information, and the like of the own node , to another node. The application A11 delivers data for broadcast distribution, to the broadcast distribution control unit A12, and receives data, which are derived from another node by broadcast distribution, from the broadcast distribution control unit A12.

The broadcast distribution control unit A12 includes a broadcast distribution data transmission and reception unit A121 and a broadcast distribution means resolving unit A122. The broadcast distribution control unit A12 includes a distribution policy setting table (corresponding to a second data holding unit according to the present invention) A123 and a hierarchical structure table (corresponding to a first data holding unit according to the present invention) A124. The broadcast distribution control unit A12 also includes a hierarchical structure configuration unit A125, a tree-type distribution unit A126, and an epidemic distribution unit A127.

The broadcast distribution data transmission and reception unit A121 provides a function of performing broadcast distribution for data given by the application A11, to one or more other nodes. When the broadcast distribution data transmission and reception unit A121 performs broadcast distribution for data, the broadcast distribution data transmission and reception unit A121 delivers, to the broadcast distribution means resolving unit A122, a portion of the data that is required for resolving as to which of the tree-type distribution and the epidemic distribution is to be used to perform the broadcast distribution. Thus, the broadcast distribution data transmission and reception unit A121 issues a request for resolving broadcast distribution means to the broadcast distribution means resolving unit A122. When the broadcast distribution means resolving unit A122 resolves that the broadcast distribution means is the tree-type distribution, the broadcast distribution data transmission and reception unit A121 deriversdata to the tree-type distribution unit A126. When the broadcast distribution means resolving unit A122 resolves that the broadcast distribution means is the epidemic distribution, the broadcast distribution data transmission and reception unit A121 derivers data to the epidemic distribution unit A127. More specifically, when the resolution result is the tree-type distribution, the broadcast distribution data transmission and reception unit A121 selects the tree-type distribution unit A126 as the broadcast distribution means. When the resolution result is the epidemic distribution, the broadcast distribution data transmission and reception unit A121 selects the epidemic distribution unit A127 as the broadcast distribution means. Then, the broadcast distribution data transmission and reception unit A121 delivers data to the selected broadcast distribution means. The broadcast distribution data transmission and reception unit A121 delivers a required portion of data, received via the tree-type distribution unit A126 or the epidemic distribution unit A127, and issues a request for resolving broadcast distribution means to the broadcast distribution means resolving unit A122. The broadcast distribution means resolving unit A122 resolves which of the tree-type distribution and the epidemic distribution is to be used to perform the broadcast distribution. When the tree-type distribution is selected as the broadcast distribution means, the broadcast distribution data transmission and reception unit A121 derivers the data to the tree-type distribution unit A126. When the epidemic distribution is selected as the broadcast distribution means, the broadcast distribution data transmission and reception unit A121 derivers the data to the epidemic distribution unit A127. The broadcast distribution data transmission and reception unit A121 also derivers the data received via the tree-type distribution unit A126 or the epidemic distribution unit A127 to the application A11.

In response to the request for resolving broadcast distribution means from the broadcast distribution data transmission and reception unit A121, the broadcast distribution means resolving unit A122 determines which of the tree-type distribution and the epidemic distribution is to be used to perform the broadcast distribution. Then, the broadcast distribution means resolving unit A122 notifies such resolution result to the broadcast distribution data transmission and reception unit A121. The broadcast distribution means resolving unit A122 refers to the distribution policy setting table A123 and the hierarchical structure table A124 to select appropriate broadcast distribution means, when resolving the broadcast distribution means.

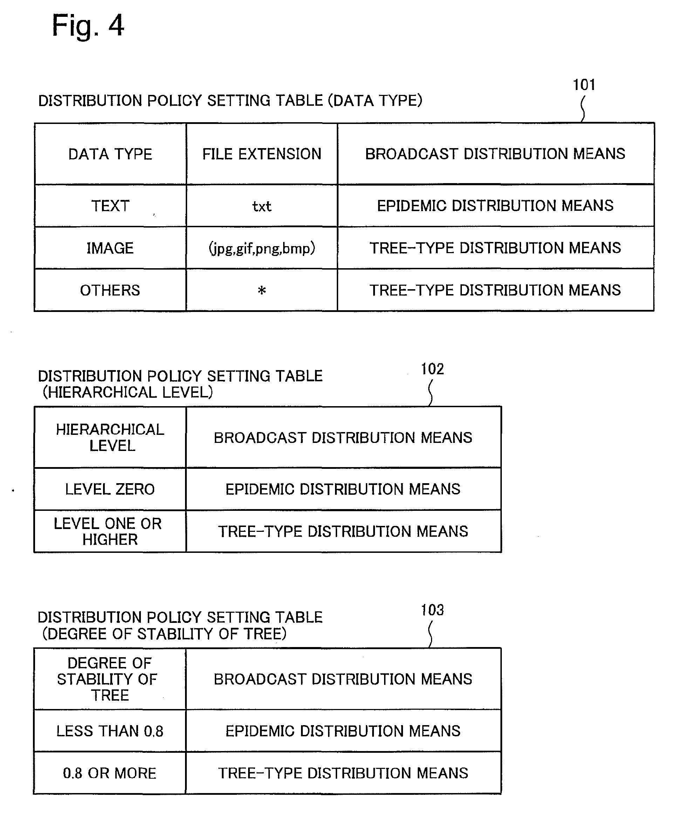

The distribution policy setting table A123 is a table referred to when the broadcast distribution means resolving unit A122 selects the broadcast distribution means, and is a table in which a selection policy is set. An example of a table set in the distribution policy setting table A123 is shown in distribution policy setting tables 101 to 103 of Fig. 4.

As shown in the distribution policy setting table 101, a policy, to select a different broadcast distribution means according to a data type, is set to that table. In the distribution policy setting table 101, the data type is distinguished according to the extension of a file. For example, in the policy setting table 101, a policy is set such that a file having "txt" as an extension is to have a data type of a text, and the epidemic distribution is selected. In addition, in the policy setting table 101, a policy is set such that a file having any one of "jpg", "gif", "png", and "bmp" as an extension is to have a data type of an image, and the tree-type distribution is selected.

In the distribution policy setting table 101, the reason why the epidemic distribution is assigned to text, and the tree-type distribution is assigned to an image and other types is as follows. The reason is that, since an amount of data of a text is small, congestion is less likely to occur even if the epidemic distribution is used.

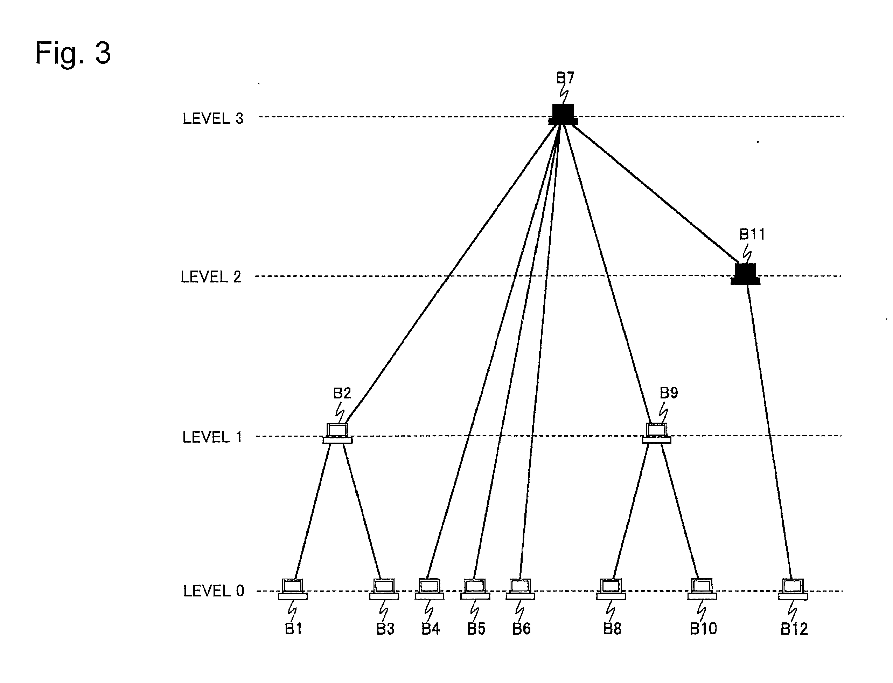

Subsequently, as shown in the distribution policy setting table 102, a policy, to select a different broadcast distribution in accordance with the level of the hierarchical structure of the node performing the broadcast distribution, is set to that table. In the distribution policy setting table 102, a policy to select the epidemic distribution when the level of the hierarchical structure of the node performing the broadcast distribution is zero is set to that table. Also, in the distribution policy setting table 102, a policy to select the tree-type distribution when the level of the hierarchical structure of the node performing the broadcast distribution is one or more is set to that table. In this case, the level "zero" of the hierarchical structure, of the node performing the broadcast distribution, indicates that the node of the level "zero" is a transmitting or receiving node in the broadcast distribution tree as shown in Fig. 3.

In the distribution policy setting table 102, the reason why the tree-type distribution is assigned to level "one" or higher is as follows. That is, a node of level "one" or higher is located away from the own node. Accordingly, if the epidemic distribution is performed for transmission to that node (a node of level "one" or higher), the amount of traffic for the distribution increases is proportional to almost a square of the number of plural hops to the node. Therefore, in this case, the efficiency of transmission to the node of level "one" or higher becomes low. In contrast, if the tree-type distribution is performed to that node, the amount of traffic does not increase in such a manner. Therefore, in the distribution policy setting table 102, the tree-type distribution is assigned to a node of level "one" or higher.

Further, as shown in the distribution policy setting table 103, a policy, to select different broadcast distribution means in accordance with the degree of stability of the broadcast distribution tree constituted by the hierarchical structure configuration unit A125, is set to that table. The degree of stability of the broadcast distribution tree is obtained by referring to the hierarchical structure table A124. In the distribution policy setting table 103, a policy to select the epidemic distribution when the degree of stability of the broadcast distribution tree is less than 0.8 is set to the table. And also, in the distribution policy setting table 103, a policy to select the tree-type distribution when the degree of stability of the broadcast distribution tree is equal to or more than 0.8 is set to the table.

The reason why the distribution policy setting table 103 assignes the epidemic distribution to the degree of stability less than 0.8 is that, if the tree-type distribution is performed by using a link of a low degree of stability, the number of nodes, to which the message is unreachable, is increased. In contrast, when the epidemic distribution is performed even by using a link of a low degree of stability, the number of nodes to which the message is unreachable, can be decreased.

When attributes such as the creator, the degree of importance, the degree of emergency, the degree of priority, and the like are described in the header of a content, the following distribution policy setting table may be added. More specifically, in this case, a distribution policy setting table may be added, in which the value of each item of attributes or a combination of two or more values thereof is associated with the epidemic distribution means or the tree-type distribution means. Each item of such attributes may be, for example, the creator, the degree of importance, the degree of emergency, the degree of priority, and the like. In this case, the broadcast distribution data transmission and reception unit A121, the broadcast distribution means resolving unit A122, and the like may directly refer to the header of the content. Another means may read these attributes from the header of the content, and the read attributes may be included in the summary vector. The header of the content may be added to the summary vector.

The above explanation shows several examples of policies which are set in the distribution policy setting table A123, however among these policies, for example, only one of them may be set in the distribution policy setting table A123. Also, multiple policies may be set in the distribution policy setting table A123, and a combination thereof may be used by the broadcast distribution means resolving unit A122 to select the broadcast distribution means. When multiple policies are combined, different broadcast distribution means may be selected in accordance with a different policy. In such a case, a method of preferentially selecting the epidemic distribution (or the tree-type distribution) as the broadcast distribution means may be considered. Alternatively, a method of, e.g., selecting broadcast distribution means, for which the number of policies selecting the same broadcast distribution means is the largest, may be considered. Still alternatively, a distribution method may be selected for each combination of multiple policies. That is, instead of using, for example, the distribution policy setting tables 101, 102, or 103, the broadcast distribution means resolving unit A122 may select a distribution method for each of 12 (=3×2×2) combinations of a policy related to the data type, a policy related to the hierarchical level, and a policy related to the degree of stability of a tree. Still alternatively, the broadcast distribution means resolving unit A122 may pass , to a function, multiple parameters respectively representing multiple distribution methods respectively corresponding to selections based on multiple policies, and determine a single distribution method by using the function..

The hierarchical structure table A124 is a table storing the hierarchical structure and broadcast distribution tree structure constituted by the hierarchical structure configuration unit A125.

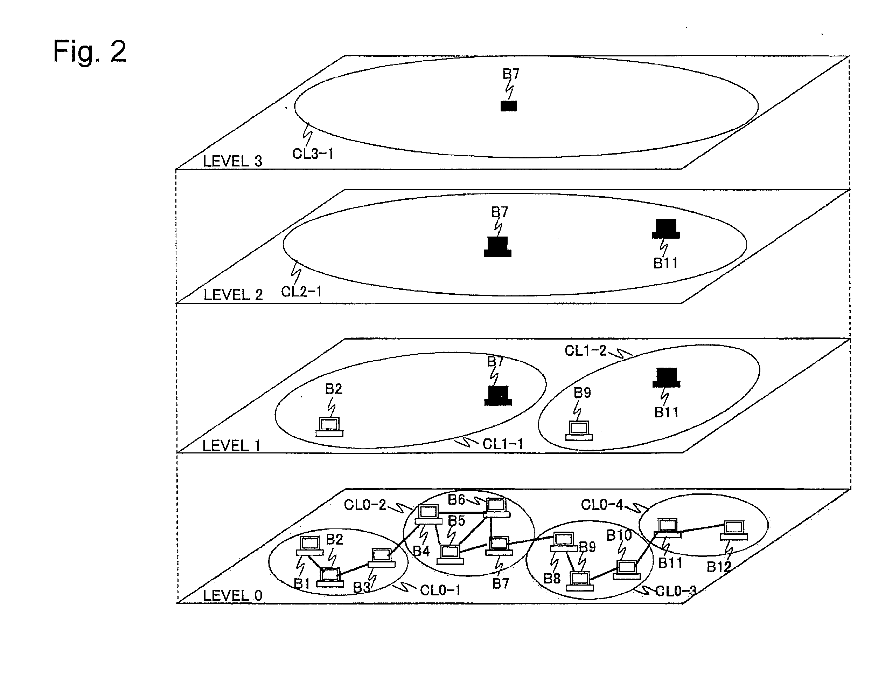

Figs. 2 and 3 are figures illustrating examples of the hierarchical structure table A124. Level 0 (zero) includes clusters CLO-1, CLO-2, CLO-3, and CLO-4. Level 1 (one) includes clusters CL1-1 and CL1-2. Level 2 (two) includes a cluster CL2-1. Level 3 (three) includes a cluster CL3-1.

The cluster CLO-1 includes nodes B1, B2, and B3. The cluster CLO-2 includes nodes B4, B5, B6, and B7. The cluster CLO-3 includes nodes B8, B9, and B10. The cluster CLO-4 includes nodes B11 and B12. The cluster CL1-1 includes nodes B2 and B7. The cluster CL1-2 includes nodes B9 and B11. The cluster CL2-1 includes nodes B7 and B11. The cluster CL3-1 includes a node B7.

When focusing on each node, the nodes B1, B3, B4, B5, B6, B8, B10, and B12 are included only in level zero. The nodes B2 and B9 are included in level zero and level one. The node B11 is included in level zero, level one, and level two. The node B7 is included in level zero, level one, level two and level three.

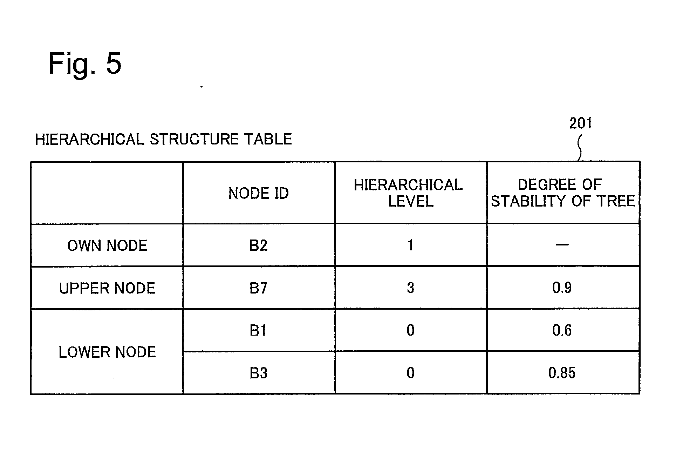

A specific example of contents of a table stored in the hierarchical structure table A124 is shown in a hierarchical structure table 201 of Fig. 5. The hierarchical structure table 201 is assumed to be a table for the node B2 of Fig. 2 and Fig. 3 (hierarchical structure table A124). As shown in the hierarchical structure table 201, the node ID of the own node is B2 (the own node is not the node A1 but is B2 in this case), and the hierarchical level thereof is 1 (one). The upper node is the node B7 of which the hierarchical level is 3 (three), and the degree of stability of the tree between the node B2 and the node B7 is 0.9. Further, the lower nodes are the node B1 and the node B3 of which hierarchical level is 0 (zero), and the degree of stability of the tree between the node B2 and the node B1 is 0.6, and the degree of stability of the tree between the node B2 and the node B3 is 0.85.

For example, the hierarchical structure configuration unit A125 uses a protocol constituting a hierarchical structure by an autonomous distributed manner in a mobile ad hoc network. A protocol called Safari as shown in NPL 2 is disclosed as an example of such a protocol.

In Safari, a control message is exchanged with another node via a TCP/IP unit A13, whereby the hierarchical structure as shown in Fig. 2 is configured in an autonomous distributed manner. Each node forms a cluster according to a level, and a representing node called drum is selected for each cluster. In the example of Fig. 2, the node B2 is a representing node in the cluster CLO-1, formed by the nodes B1, B2, and B3, which is one of the level zero cluster in the lowermost layer. The representing nodes in level zero are level-one nodes, and a cluster in level one is formed by level-one nodes. The node B7 is selected as the representing node in the cluster CL1-1, formed by the nodes B2 and B7, which is one of the level one clusters. Above described operation is repeated by recursively increasing the level, until a single representing node is selected in a cluster in the uppermost level. In the example of Fig. 2, the cluster in the uppermost level is CL3-1, and the node B7 is selected as the representing node.

As described above, as a result of configuring the hierarchical structure, a tree structure is made, in which the representing node in the cluster in the uppermost level is the root node and the representing nodes in each level are connected. Fig. 3 illustrates the hierarchical structure shown in Fig. 2 in a format of tree structure. As shown in Fig. 3, the tree structure can be formed, in which the node B7 is the root node. The broadcast distribution can be performed by applying this tree structure to the broadcast distribution routing, so that the tree-type broadcast distribution in the mobile ad hoc network can be realized.

The hierarchical structure configuration unit A125 registers information about the configured hierarchical structure to the hierarchical structure table A124. The hierarchical structure configuration unit A125 not only registers the ID and the hierarchical level of the own node and the ID and the hierarchical level of the upper and lower nodes, but also registers the degree of stability of the connection between the own node and each of the upper and lower nodes, via the wireless link. The hierarchical structure configuration unit A125 registers the degree of stability in a form of numerical value called the degree of stability of the tree. For example, as calculation method of the degree of stability of the tree, calculating a rate, of successful reception of control message (for example, Keep-Alive message and Hello message) exchanged between the own node and each of the upper and lower nodes, may be used. More specifically, for example, that rate may be obtained by a calculating ratio of the number of successes for the number of tries. For example, when control messages are received ten times out of ten times for the exchange of the control messages, the degree of stability of the tree is calculated to be 1.0. When control messages are received only six times out of ten times for the exchange of the control messages, the degree of stability of the tree is calculated to be 0.6. As described above, by calculating the degree of stability of the tree, it is possible to represent, by the calculated degree of stability, how stable each of the upper and lower nodes in the tree structure is connected to the network.

The tree-type distribution unit A126 provides a function of performing tree-type broadcast distribution using a broadcast distribution tree structured by the hierarchical structure configuration unit A125. When the tree-type broadcast distribution is performed, the tree-type distribution unit A126 refers to the hierarchical structure table A124 to determine the node to which data are to be transferred. For example, it is assumed that the node A1 is located at the position of the node B2 in the tree structure in Fig. 3, and the contents of the hierarchical structure table A124 is the hierarchical structure table 201 as shown in Fig. 5 (the node B2 is deemed to be replaced with the node A1). When the own node (A1) is the transmission source node of the broadcast distribution data, the tree-type distribution unit A126 transfers the data via the TCP/IP unit A13 to a single upper node and all the lower nodes (nodes B1, B3, and B7 in this case) in the hierarchical structure table A124. When broadcast distribution data are received from another node in the broadcast distribution tree, the tree-type distribution unit A126 transfers the data via the TCP/IP unit A13 to a single upper node (however, a node from which the data are received is excluded) and all the lower nodes (however, a node from which the data are received is excluded) in the hierarchical structure table A124. For example, if the broadcast distribution data are received from the node B1, the node A1 transfers the data to the nodes B3 and B7. In this manner, data are transferred using the broadcast distribution tree, so that the tree-type distribution unit A126 can efficiently perform broadcast distribution of data while preventing redundant distribution.

The epidemic distribution unit A127 provides a function of performing broadcast distribution of the broadcast distribution data by using the epidemic distribution. The details of the epidemic distribution have been described in the Background Art, and therefore repeated explanation thereabout is omitted.

The TCP/IP unit A13 is a standard communication function provided in the OS (Operation System). In the present exemplary embodiment, the TCP/IP unit A13 provides transmission and reception service of the data/message to the hierarchical structure configuration unit A125, the tree-type distribution unit A126, and the epidemic distribution unit A127. These data/messages are transmitted and received using TCP (Transmission Control Protocol) or UDP (User Datagram Protocol).

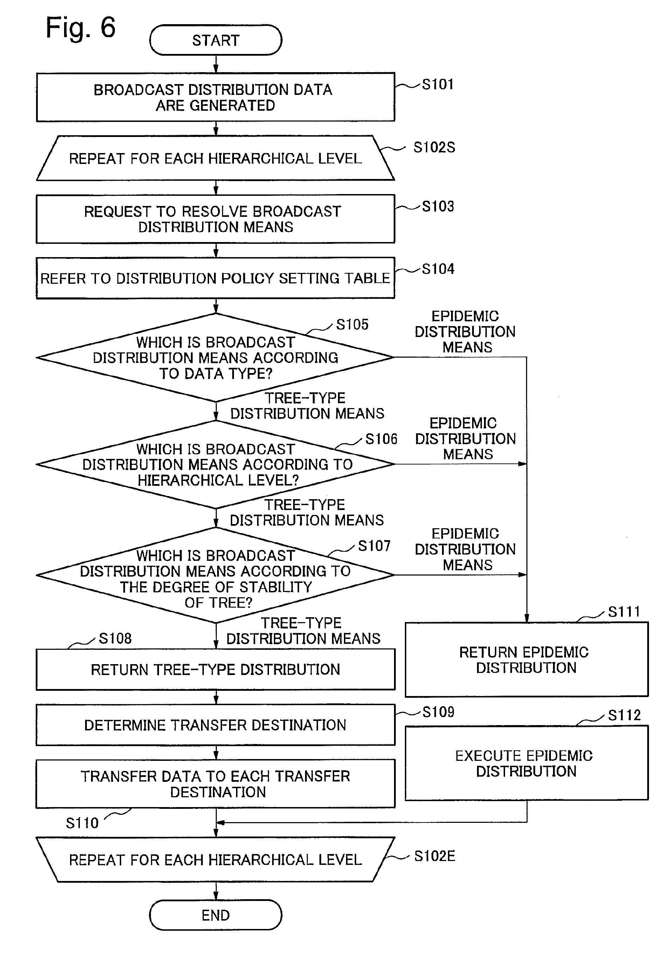

Subsequently, operation performed by the node A1 to resolve the broadcast distribution means to transfer broadcast distribution data according to the present exemplary embodiment will be explained with reference to Fig. 6.

First, the node A1 receives broadcast distribution data from the application A11 or another node, and accordingly, the broadcast distribution data transmission and reception unit A121 generates broadcast distribution data (step S101 in Fig. 6).

Subsequently, the processing from step S103 to step S110 or from step S103 to step 112 is repeated for each hierarchical level (step S102S to step S102E). In this case, the hierarchical level which is the target of repetition processing is a hierarchical level of the upper node with respect to the own node, and a hierarchical level of the lower node with respect to the own node, in the hierarchical structure table 201. For example, as shown in Fig. 5, if the own node is the node B2, the hierarchical level to which the upper node B7 belongs (level two) and the hierarchical level to which the lower nodes B1, B3 belong (level zero) are the hierarchical level of the target of the repetition processing.

In each repetition, the broadcast distribution data transmission and reception unit A121 requests the broadcast distribution means resolving unit A122 to resolve the broadcast distribution means in order to resolve the broadcast distribution means applied to the broadcast distribution data (step S103). More specifically, the broadcast distribution data transmission and reception unit A121 requests the broadcast distribution means resolving unit A122 to determine whether to select the tree-type distribution means or to select the epidemic distribution means, as the broadcast distribution means.

The broadcast distribution means resolving unit A122 refers to the distribution policy setting table A123 to look up a resolution policy of the broadcast distribution means applied to the broadcast distribution data (step S104). In this case, in the distribution policy setting table A123, it is assumed that three policies, including the distribution policy setting tables 101 to 103 as shown in Fig. 4, are set. The following steps S105, S106, S107 are processing in accordance with the setting for preferentially selecting the epidemic distribution when each of the three policies is referred to. That is, for example, when the epidemic distribution is selected with regard to at least a single distribution policy setting table, steps S105 to S107 are processing in accordance with the setting for adopting the epidemic distribution as the finally determined distribution method. In accordance with such setting, when the epidemic distribution is selected with regard to at least a single distribution policy setting table, the epidemic distribution means is selected as the broadcast distribution means. On the contrary, in accordance with such setting, only when the tree-type distribution is selected in association with all the distribution policy setting tables, the tree-type distribution is adopted as the finally determined distribution method. In this case, the tree-type distribution means is selected as the broadcast distribution means.

Each of the step S105 and subsequent steps will be explained below. In step S105, the broadcast distribution means resolving unit A122 refers to the distribution policy setting table 101 which is the distribution policy about the data type, thus resolving the broadcast distribution means.

In step S106, the broadcast distribution means resolving unit A122 refers to the distribution policy setting table 102 which is the distribution policy for the hierarchical level, thus resolving the broadcast distribution means. That is, the broadcast distribution means resolving unit A122 searches the broadcast distribution means corresponding to the hierarchical level of the own node described in the hierarchical structure table 201 as shown in Fig. 5 from the distribution policy setting table 102. Then, the broadcast distribution means resolving unit A122 determines the broadcast distribution means searched from the distribution policy setting table 102, as the broadcast distribution means to be resolved. The broadcast distribution means searched from the distribution policy setting table 102 corresponds to the hierarchical level of the own node as described above, and does not correspond to the hierarchical level which is the target of the current repetition processing.

In step S107, the broadcast distribution means resolving unit A122 refers to the distribution policy setting table 103 which is the distribution policy about the degree of stability of the tree, thus resolving the broadcast distribution means.

More specifically, when the current repetition processing is processing for the upper node for the own node, the broadcast distribution means resolving unit A122 searches the degree of stability of the tree of the single existing upper node with respect to the own node from the hierarchical structure table 201 as shown in Fig. 5 in step S107. Then, on the basis of the degree of stability of the tree thus searched and the distribution policy setting table 103, the broadcast distribution means resolving unit A122 selects the epidemic distribution means or the tree-type distribution means as the broadcast distribution means for the single upper node.

For example, as shown in Fig. 3, when the own node is B2, the single upper node existing with respect to the own node is the node B7. Accordingly, the broadcast distribution means resolving unit A122 of the own node (B2) searches the hierarchical structure table 201 as shown in Fig. 5 and finds the degree of stability of the tree "0.9" for the upper node B7. The broadcast distribution means resolving unit A122 selects, as the broadcast distribution means corresponding to the degree of stability of the tree "0.9" thus searched, the tree-type distribution means from the broadcast distribution means of the distribution policy setting table 103. The broadcast distribution means resolving unit A122 determines that the tree-type distribution means is the distribution means for the upper node B7. As shown in Fig. 2, the distribution to the upper node B7 is distribution in the hierarchy of level one.

When the current repetition processing is processing for the lower node, the broadcast distribution means resolving unit A122 searches the hierarchical structure table 201 as shown in Fig. 5 to find the degree of stability of the tree for one or more lower nodes existing with respect to the perspective of the own node. On the basis of the degree of stability of the tree thus searched and the distribution policy setting table 103, the broadcast distribution means resolving unit A122 selects the broadcast distribution means applied to the entire lower nodes.

As shown in Fig. 3, when the own node is B2, one or more lower nodes existing with respect to the own node (B2) are nodes B1 and B3. Accordingly, the broadcast distribution means resolving unit A122 searches the degree of stability of the tree "0.6" for the lower node B1 and the degree of stability of the tree "0.85" for the lower node B3 from the hierarchical structure table 201 as shown in Fig. 5. Then, the broadcast distribution means resolving unit A122 derives the degree of stability of the tree in the hierarchical level zero on the basis of the degree of stability of the tree for the lower node B1 and the degree of stability of the tree for the lower node B3. For example, when the minimum degree of stability of the tree is selected as the degree of stability of the tree in the hierarchical level zero, the degree of stability of the tree is min (0.6, 0.85)=0.6. When the maximum degree of stability of the tree is selected as the degree of stability of the tree in the hierarchical level zero, the degree of stability of the tree is max (0.6, 0.85)=0.85. When the average value thereof is selected as the degree of stability of the tree in the hierarchical level zero, the degree of stability of the tree is ave (0.6, 0.85)=0.725. The broadcast distribution means resolving unit A122 searches, as the broadcast distribution means corresponding to the degree of stability of the tree thus derived, the tree-type distribution means or the epidemic distribution means from the distribution policy setting table 103. The broadcast distribution means resolving unit A122 determines that the broadcast distribution means thus searched is the distribution means common to both of the lower nodes B1, B3. For example, when min (0.6, 0.85)=0.6 is used as the derived degree of stability of the tree, the broadcast distribution means resolving unit A122 searches, as the broadcast distribution means, the epidemic distribution means corresponding to the degree of less than 0.6 from the distribution policy setting table 103. For example, when max (0.6, 0.85)=0.85 is used as the derived degree of stability of the tree, the broadcast distribution means resolving unit A122 searches, as the broadcast distribution means, the tree-type distribution means corresponding to the degree of 0.8 or more from the distribution policy setting table 103. For example, when ave (0.6, 0.85)=0.725 is used as the derived degree of stability of the tree, the broadcast distribution means resolving unit A122 searches, as the broadcast distribution means, the epidemic distribution means corresponding to the degree of less than 0.6 from the distribution policy setting table 103.

When the tree-type distribution is selected in all of steps S105 to S107 in the hierarchical levels which are the target of the current repetition processing, then step S108 is executed. In this case, the broadcast distribution means resolving unit A122 returns the tree-type broadcast distribution to the broadcast distribution data transmission and reception unit A121 as a response to the request for resolving broadcast distribution means in step S103 (step S108).

Therefore, the node selects the epidemic distribution means or the tree-type distribution means as the broadcast distribution means in all the hierarchical levels which are the target of the repetition processing. For example, when the own node is B2, the own node B2 belongs the hierarchical level zero and the hierarchical level one. In this case, the distribution to the lower nodes B1 and B3 is distribution in the hierarchical level zero, and the distribution to the upper node B2 is distribution in the hierarchical level one. For example, there may be a case where the epidemic-type distribution is performed to the nodes B1 and B3 which belong to the hierarchical level zero, and the tree-type distribution is performed to the level node B7 which belongs to the hierarchical level one. There may be another case where the tree-type distribution is performed to all of the nodes B1, B3, and B7. There may be still another case where the epidemic-type distribution is performed to all of the nodes B1, B3, and B7. In this case, there is a presumption that each node is capable of performing not only the epidemic-type distribution but also the tree-type distribution in not only the hierarchical level zero but also a hierarchical level higher than that. However, normally, each node does not allow the epidemic-type distribution and the tree-type distribution to be used in a mixed manner within the same hierarchical level, and performs only one of the distributions selected. Like the tree-type distribution in other hierarchical levels, the tree-type distribution in the hierarchical level zero is distribution according to a determined link.

The tree-type distribution is included in a structure-type distribution in the sense that it is a distribution method according to a determined link. In this case, the determined link includes a permanently defined link, a link defined immediately before the distribution, and a link that does not change during the distribution. More specifically, the determined link forms a determined structure which is an aggregation thereof, and the distribution performed therein is the structure-type distribution. In contrast, the epidemic-type distribution is included in the nonstructural distribution in the sense that it is a distribution along a non-determined link. In the present exemplary embodiment, for example, the tree-type distribution is shown as the structure-type distribution. In addition, a loop-type distribution and a broadcast distribution in accordance with a distributed hash table can also be used as the structure-type distribution. In the present exemplary embodiment, for example, the epidemic-type distribution is shown as the nonstructural distribution. In addition, a flood-type distribution can be used as the nonstructural distribution.

After step S108, the broadcast distribution data transmission and reception unit A121 passes the broadcast distribution data to the tree-type distribution unit A126. The tree-type distribution unit A126 refers to the hierarchical structure table A124 to determine the transfer destination of the broadcast distribution data (step S109). Then, the tree-type distribution unit A126 transfers the broadcast distribution data to the determined transfer destination (step S110).

When the epidemic distribution is selected in any one of steps S105 to S107, the broadcast distribution means resolving unit A122 executes step S111. More specifically, the broadcast distribution means resolving unit A122 returns the epidemic broadcast distribution to the broadcast distribution data transmission and reception unit A121 as a response to the request for the resolving broadcast distribution means in step S103 (step S111).

After step S111, the broadcast distribution data transmission and reception unit A121 passes the broadcast distribution data to the epidemic distribution unit A127. The epidemic distribution unit A127 broadcasts and distributes the broadcast distribution data by using the epidemic distribution (step S112).

In the above described exemplary embodiment, only when the tree-type distribution is selected as the distribution means under all of the criteria, the tree-type distribution is finally selected as the distribution means. The tree-type distribution relies on a presumption that a network has end-to-end connectivity in the topology of the network. When such presumption is not satisfied, the tree-type distribution may not always be able to perform distribution to a target node as desired. Therefore, in order to finally have the tree-type distribution means to be selected as the distribution means, usually, the following conditions are satisfied. More specifically, when the degree of stability of the tree is adopted as the criteria, it is necessary to satisfy at least a condition that the tree-type distribution means is selected as the distribution means. In order to perform the tree-type distribution, it is often necessary to satisfy various other conditions. However, it is not necessarily required that the tree-type distribution is selected as the distribution means under all of the criteria other than the degree of stability of the tree. In some cases, the epidemic-type distribution is to be actively selected, on the contrary, a case that the epidemic-type distribution is selected because of a condition for performing the tree-type distribution is not satisfied. Hereinafter, a case where the tree-type distribution is suitable and a case where the epidemic-type distribution is suitable in accordance with several types of evaluation criteria will be shown.

### (Cases where tree-type distribution is suitable)

(a) Evaluation criteria about the amount of traffic:
   * A case where the file size of a content is large,
   * A case where there are many distribution destination nodes.

   The amount of traffic is high in both of the case where the file size is large and the case where there are many distribution destination nodes. In these cases, the tree-type distribution is more suitable than the epidemic distribution.
(b) Evaluation criteria about network state:
   * A case where the degree of stability of the link is high,
   * A case where the degree of stability of the link is high and therefore distribution can be done in a high hierarchical level,
   * A case where link bandwidth is narrow.
(c) Evaluation criteria about content(s):
   * A case where the degree of importance of a content, the degree of emergency of a content, and the degree of priority of a content are relatively low.

### (Cases where epidemic-type distribution is suitable)

(a) Evaluation criteria about the amount of traffic:
   * A case where the file size of a content is small,
   * A case where there are less distribution destination nodes.
(b) Evaluation criteria about network state:
   * A case where the degree of stability of the link is low,
   * A case where the degree of stability of the link is low and therefore distribution can be done in a high hierarchical level,
   * A Case where link bandwidth is wide.
(c) Evaluation criteria about content(s):
   * A case where the degree of importance of a content, the degree of emergency of a content, and the degree of priority of a content are relatively low.

In general, the broadcast distribution means resolving unit A122 serving as the selection means comprehensively derives a combination of distribution means to be selected under evaluation methods according to various kinds of evaluation criteria as described above. Then, the broadcast distribution means resolving unit A122 finally selects, as the distribution means, the epidemic distribution means or the tree-type distribution means according to a predetermined total evaluation method. Comprehensively deriving the combination includes selecting distribution means to be selected under a single criterion and comprehensively deriving distribution means to be selected under each of two or more criteria. These (deriving of the combination) can be achieved by replacing operation according to the flowchart as shown in Fig. 6 (a portion in steps S105 to S107 in particular) with operation according to another flowchart. These (deriving of the combination) can also be achieved by inputting, as input data, data representing the distribution means selected under each of the criteria, and referring to an external table for selecting the epidemic distribution means or the tree-type distribution means as the distribution means in accordance with a combination of input data.

The advantages of the present exemplary embodiment will be explained below.

In the present exemplary embodiment, in response to a request for resolving broadcast distribution means from the broadcast distribution data transmission and reception unit A121, the broadcast distribution means resolving unit A122 refers to the distribution policy setting table A123 and the hierarchical structure table A124 and resolves as to which of the tree-type distribution and epidemic distribution is used to perform the broadcast distribution. Then, the broadcast distribution means resolving unit A122 returns the resolution result to the broadcast distribution data transmission and reception unit A121. The broadcast distribution data transmission and reception unit A121 performs the broadcast distribution by using the broadcast distribution means resolved by the broadcast distribution means resolving unit A122.

By doing so, the broadcast distribution means can be selectively used in accordance with the type of the broadcast distribution data and the configured hierarchical structure, and the situation of the network on the basis of the policy of the broadcast distribution.

By setting the policy of the broadcast distribution is appropriately, when the network topology is stable, the amount of traffic of the broadcast distribution can be effectively reduced, e.g., the tree-type distribution is actively used.

As described above, in the present exemplary embodiment, when a predetermined condition is satisfied, the epidemic distribution having a highly robust distribution performance but having a low efficiency can be applied. In the present exemplary embodiment, when another predetermined condition is satisfied, the tree-type distribution having a lower level of robustness but having a high efficiency can be applied.

### [Second exemplary embodiment]

Subsequently, the second exemplary embodiment of the present invention will be explained in details with reference to drawings.

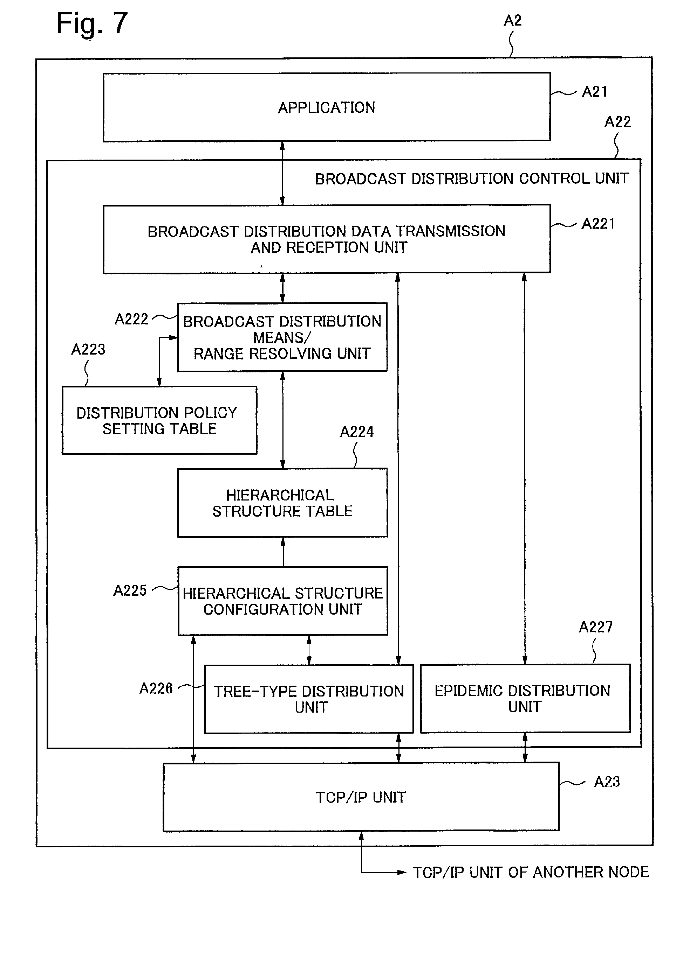

As shown in Fig. 7, the second exemplary embodiment of the present invention includes a node A2. Like the node A1 according to the first exemplary embodiment, the node A2 is a communication device connected to a network by a wireless link.

The node A2 includes an application A21, a broadcast distribution control unit A22, and a TCP/IP unit A23.

The application A21 and the TCP/IP unit A23 provides the same functions as the application A11 and the TCP/IP unit A13, respectively, of the node A1 according to the first exemplary embodiment, and therefore, repeated explanation thereabout is omitted.

The broadcast distribution control unit A22 includes a broadcast distribution data transmission and reception unit A221 and a broadcast distribution means/range resolving unit A222. The broadcast distribution control unit A22 includes a distribution policy setting table A223 and a hierarchical structure table A224. The broadcast distribution control unit A22 includes a hierarchical structure configuration unit A225, a tree-type distribution unit A226, and an epidemic distribution unit A227.

Among them, the hierarchical structure table A224 and the hierarchical structure configuration unit A225 provides the same functions as the hierarchical structure table A124 and the hierarchical structure configuration unit A125, respectively, of the node A1 according to the first exemplary embodiment, and therefore, repeated explanation thereabout is omitted.

The broadcast distribution data transmission and reception unit A221 further provides not only the function of the broadcast distribution data transmission and reception unit A121 of the node A1 according to the first exemplary embodiment but also the following functions. More specifically, the broadcast distribution data transmission and reception unit A221 provides the function of not only resolving which of the tree-type distribution and the epidemic distribution is used to perform the broadcast distribution, but also resolving the range of the broadcast distribution when the broadcast distribution data transmission and reception unit A221 requests the broadcast distribution means/range resolving unit A222 to resolve the broadcast distribution means. Then, the broadcast distribution data transmission and reception unit A221 passes the broadcast distribution data, including the resolved range of the broadcast distribution as additional information, to the tree-type distribution unit A226 or the epidemic distribution unit A227.

The broadcast distribution means/range resolving unit A222 provides not only the function of the broadcast distribution means resolving unit A122 of the node A1 according to the first exemplary embodiment, but also the following functions. More specifically, the broadcast distribution means/range resolving unit A222 provides the function of not only resolving which of the tree-type distribution and the epidemic distribution is used to perform the broadcast distribution but also resolving the range of the broadcast distribution, and incorporating these resolution results into a response when the broadcast distribution means/range resolving unit A222 receives the request for resolving broadcast distribution means from the broadcast distribution data transmission and reception unit A221. In the resolution of the broadcast distribution means/range, the broadcast distribution means/range resolving unit A222 refers to the distribution policy setting table A223 and the hierarchical structure table A224, and selects appropriate broadcast distribution means/range. When the broadcast distribution range is limited, the broadcast distribution means/range resolving unit A222 resolves the node ID of the representing node of the cluster corresponding to the broadcast distribution range from the hierarchical structure table, and returns the broadcast distribution range, including the node ID of the representing node, to the broadcast distribution data transmission and reception unit A221. In this case, for example, resolving the node ID of the representing node of the cluster corresponding to the broadcast distribution range means, by referring to Fig.3, obtaining the ID of the node B2, when the own node is the node B1, and the broadcast distribution range is hierarchical level one. For the other example, resolving the node ID of the representing node of the cluster means obtaining the ID of the node B7, when the own node is the node B1, and the broadcast distribution range is hierarchical level three.

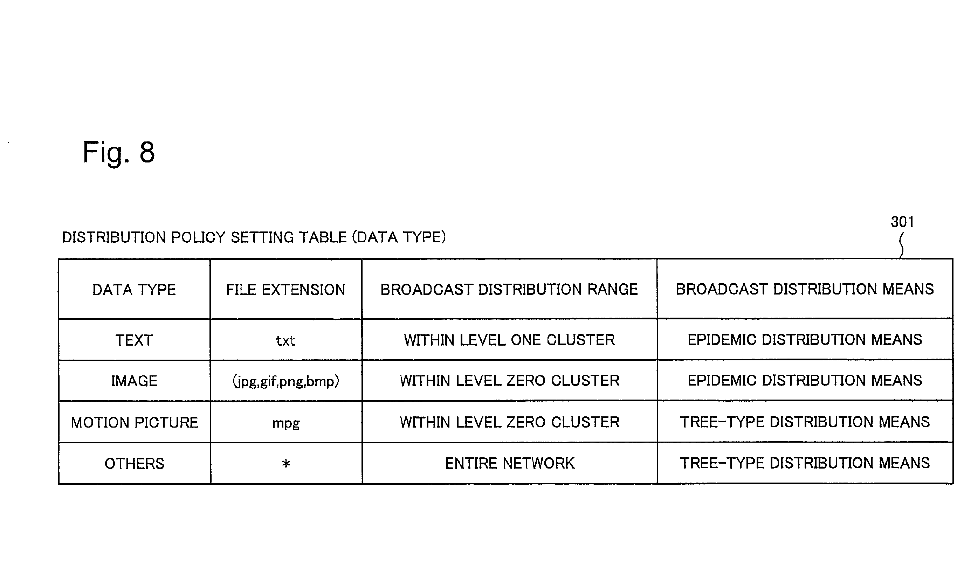

In the distribution policy setting table A223, not only the content set in the distribution policy setting table A123 of the node A1 according to the first exemplary embodiment but also the broadcast distribution range are set as a policy. The distribution policy setting table 301 of Fig. 8 shows an example of a table set in the distribution policy setting table A223.

Referring to the distribution policy setting table 301, a policy, for selecting a different broadcast distribution according to the data type, is set. In the distribution policy setting table 301, the data type is distinguished according to the extension of a file. For example, in the policy setting table 301, a policy is set to determine that the data type of a file having "txt" as an extension is text, the broadcast distribution range is within the level 1 (one) class, and the broadcast distribution means is the epidemic distribution. Likewise, in the policy setting table 301, a policy is set to determine that the data type of a file having any one of "jpg", "gif", "png", and "bmp" as an extension is an image, the broadcast distribution range is within the level 0 (zero) class, and the broadcast distribution means is the epidemic distribution. In the policy setting table 301, a policy is set to determine that the data type of a file having "mpg" as an extension is motion picture, the broadcast distribution range is within the level 0 (zero) class, and the broadcast distribution means is the tree-type distribution. In the policy setting table 301, a policy is set to determine that the broadcast distribution range of the other files is the entire network, and the broadcast distribution means thereof is the tree-type distribution.

The tree-type distribution unit A226 provides not only the function of the tree-type distribution unit A126 of the node A1 according to the first exemplary embodiment, but also the following function. More specifically, the tree-type distribution unit A226 provides the function of performing the tree-type distribution in such a manner that the range of the nodes of distribution target is limited in accordance with the broadcast distribution range included as the additional information in the broadcast distribution data given by the broadcast distribution data transmission and reception unit A221. The broadcast distribution range is set in units of clusters in any given level configured by the hierarchical structure configuration unit A225. Then, the node ID (node name, IP address, and the like) of the representing node of the cluster is used as an identifier for distinguishing the cluster. When the broadcast distribution range is limited, the node ID of the representing node of the cluster corresponding to the broadcast distribution range is included in the transmitted broadcast distribution data. When the tree-type distribution unit A226 receives the broadcast distribution data, the broadcast distribution range is distinguished by the node ID. Then, the tree-type distribution unit A226 does not transfer the broadcast distribution data to the node which is not included in the determined broadcast distribution range. That is, the tree-type distribution unit A226 prohibits distribution to such a node. When the broadcast distribution range of the received broadcast distribution data is different from the cluster to which the own node belongs, the tree-type distribution unit A226 discards the broadcast distribution data. More specifically, the tree-type distribution unit A226 prohibits distribution of the broadcast distribution data. In the other cases, the broadcast distribution of the data is permitted.

The epidemic distribution unit A227 provides not only the function of the epidemic distribution unit A127 of the node A1 according to the first exemplary embodiment, but also the following function. More specifically, the epidemic distribution unit A227 provides the function of performing the epidemic distribution in such a manner that the range of the nodes received is limited in accordance with the broadcast distribution range included as the additional information in the broadcast distribution data given by the broadcast distribution data transmission and reception unit A221. Like the tree-type distribution unit A226, the broadcast distribution range is set in units of clusters, and the node ID of the representing node of the cluster is used as the identifier for distinguishing the broadcast distribution range, and is included in the transmitted broadcast distribution data. When the epidemic distribution unit A227 receives the broadcast distribution data, the broadcast distribution range is distinguished according to the node ID. When the broadcast distribution range of the received broadcast distribution data is different from the cluster to which the own node belongs, the broadcast distribution data is discarded. More specifically, the epidemic distribution unit A227 prohibits distribution of the broadcast distribution data. In the other cases, the epidemic distribution unit A227 permits the distribution. The epidemic distribution unit A227 controls the distribution range of data, by the epidemic distribution, to be limited to within the cluster of the broadcast distribution range, in this manner.

Therefore, the broadcast range is applied regardless of whether the tree-type distribution unit A226 is used or the epidemic distribution unit A227 is used.

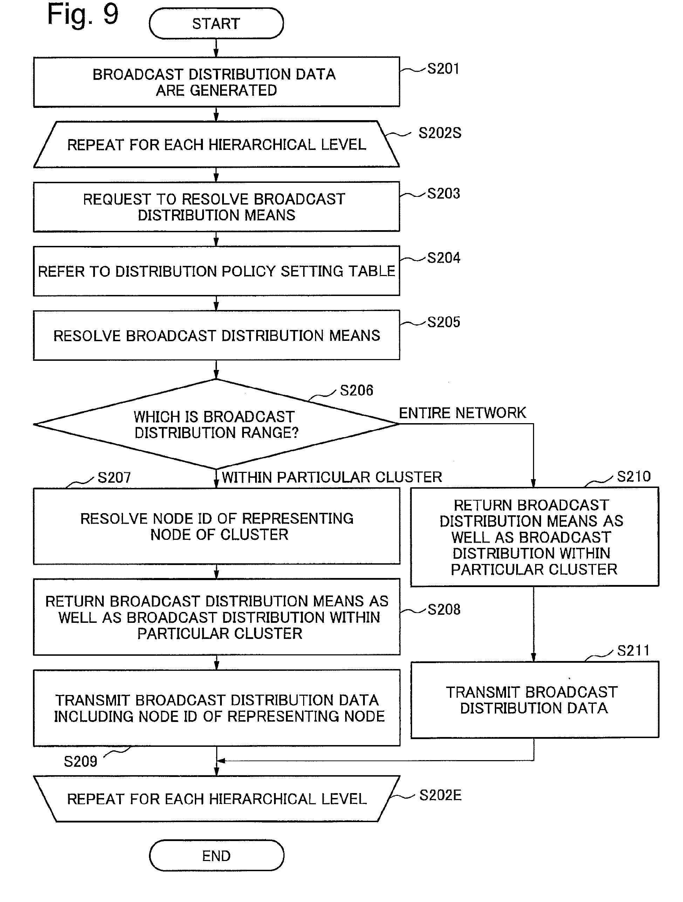

Operation performed by the node A2 to resolve the broadcast distribution means to transfer broadcast distribution data according to the present exemplary embodiment will be explained with reference to Fig. 9, as below.

First, the node A2 receives broadcast distribution data from the application A21 or another node, and accordingly, the broadcast distribution data transmission and reception unit A221 generates broadcast distribution data (step S201 in Fig. 9).

Subsequently, the processing from step S203 to step S209 or from step S203 to step 211 is repeated for each hierarchical level (step S202S to step S202E). In this case, the hierarchical level which is the target of repetition processing is a hierarchical level to which the upper node belongs with respect to the own node and a hierarchical level to which the lower node belongs with respect to the own node in the hierarchical structure table 201. For example, as shown in Fig. 5, if the own node is the node B2, the hierarchical level to which the upper node B7 belongs (level two) and the hierarchical level to which the lower nodes B1, B3 belong (level zero) are the hierarchical level of the target of the repetition processing.

In each repetition, the broadcast distribution data transmission and reception unit A221 requests the broadcast distribution means/range resolving unit A222 to resolve the broadcast distribution means (step S203). The broadcast distribution means/range resolving unit A222 refers to the distribution policy setting table A223 to look up a resolution policy of the broadcast distribution means applied to the broadcast distribution data (step S204). The series of operation in step S203 and step S204 explained above is the same as step S103 and step S104 in the operation of the node A1 according to the first exemplary embodiment.

Then, the broadcast distribution means/range resolving unit A222 refers to the distribution policy setting table A223 to resolve the broadcast distribution means (step S205). This operation is the same as the set of steps S105 to S107 in the operation of the node A1 according to the first exemplary embodiment, and therefore detailed explanation thereabout is omitted.

Further, the broadcast distribution means/range resolving unit A222 refers to the distribution policy setting table A223, and resolves the broadcast distribution range of the broadcast distribution data (step S206). In this case, the broadcast distribution range described in the distribution policy setting table 301 about the data type, as shown in Fig. 8, is used as the broadcast distribution range. Besides, a broadcast distribution range, which is described in the distribution policy setting table about the other items, may be used as the broadcast distribution range. Also, the broadcast distribution range determined according to a predetermined method, on the basis of a combination of the broadcast distribution ranges described in the distribution policy setting table about each of multiple items, may be used as such a broadcast distribution range.

In addition, as a method for determining the broadcast distribution range, the following examples may be considered :
* A relatively wide broadcast distribution range is resolved (determined) in a case where the degree of importance of a content, the degree of emergency of a content, and the degree of priority of at least one of contents are relatively low are high.
* A relatively wide broadcast distribution range is resolved when the content size is small.
* A relatively wide broadcast distribution range is resolved when the size of the network (the number of nodes and the like) is small.

To "resolve" the broadcast distribution range means, more specifically, to make the following determinations in a case where the nodes in the network are clustered by the hierarchical structure configuration function. More specifically, to "resolve" the broadcast distribution range means to determine, whether the nodes of the target of the broadcast distribution is limited into the nodes existing in the same cluster, or the nodes of the target of the broadcast distribution includes the nodes of the entire network including the nodes outside of the cluster.

In a case where the broadcast distribution range is resolved to be within a particular cluster in step S206, the broadcast distribution means/range resolving unit A222 refers to the hierarchical structure table A224, and resolves the node ID of the representing node of the cluster which is the broadcast distribution range (step S207).

Hereafter, resolving the node ID will be explained.

The node, which is the start point of the broadcast distribution, looks up the representing node ID of the cluster, when the broadcast distribution range is limited to within the same cluster of any given hierarchical level in step S205. In this case, information about the representing node ID is shared by the nodes in the same cluster. On the other hand, even when the broadcast distribution range is limited to within the same cluster of any given hierarchical level in step S206, a node other than the start point of the broadcast distribution (more specifically, a node which relays or receives the broadcast distribution data) need not to look up the representing node ID of the cluster. In this case, instead of that, a node other than the start point of the broadcast distribution uses the representing node ID included in the received broadcast distribution message as it is. To resolve the node ID means to look up the representing node ID of the cluster as described above or to output the representing node using the received representing node ID as it is. The representing node ID resolved in step A207 is used in steps S208 and S209 explained below.

After step S207, the broadcast distribution means/range resolving unit A222 notifies a response including the broadcast distribution means resolved in step S205 and the broadcast distribution range resolved in step S205, to the broadcast distribution data transmission and reception unit A221 (step S208). At this occasion, the broadcast distribution means/range resolving unit A222 notifies a response including the broadcast distribution range as well as the node ID of the representing node resolved in step S207.

After step S208, the broadcast distribution data transmission and reception unit A221 passes the broadcast distribution data including the node ID of the representing node which is the broadcast distribution range, to the tree-type distribution unit A226 or the epidemic distribution unit A227. According to the broadcast distribution means resolved in step S205, the broadcast distribution data are passed to one of the tree-type distribution unit A226 and the epidemic distribution unit A227. The tree-type distribution unit A226 or the epidemic distribution unit A227 transmits the broadcast distribution data including the node ID (step S209).

On the other hand, a node receiving the broadcast distribution data transmitted in step S209 determines whether the received broadcast distribution data include the node ID of the representing node as the additional information or not. When the node ID of the representing node is determined to be included, the node verifies whether the node ID matches or is different from the node ID of the representing node of the cluster to which the node itself belongs. When the node ID is different therefrom, the node discards the received broadcast distribution data. More specifically, such a node prohibits distribution of the received broadcast distribution data. In the other case, such a node permits transfer of the received broadcast distribution data. For example, a case where the broadcast distribution is performed within the cluster CL0-1 in the level zero cluster , as shown in Fig. 2, will be explained below. Since the node ID of the representing node of the cluster CL0-1 is B2, the broadcast distribution data having the additional information "B2" as the broadcast distribution range, are transmitted. When the broadcast distribution data are received by the node B3, the node ID (B2) of the representing node of the cluster to which the node B3 belongs matches "B2", and therefore, the node B3 accepts the broadcast distribution data, and further transfers (relays) the broadcast distribution data. When the node B4 receives the broadcast distribution data, the node ID (B7) of the representing node of the cluster to which the node B4 belongs is different from "B2", and therefore the node B4 discards the received broadcast distribution data.

When the broadcast distribution range is resolved to be the entire network in step S206, the broadcast distribution means/range resolving unit A222 returns the broadcast distribution means resolved in step S204 and the broadcast distribution range (the entire network) resolved in step S205 to the broadcast distribution data transmission and reception unit A221 (step S210).

After step S209, the broadcast distribution data transmission and reception unit A221 gives the broadcast distribution data to the tree-type distribution unit A226 or the epidemic distribution unit A227. Which of the tree-type distribution unit A226 and the epidemic distribution unit A227 the broadcast distribution data are given to depends on the broadcast distribution means resolved in step S204. The tree-type distribution unit A226 or the epidemic distribution unit A227 transmits the broadcast distribution data (step S211).

The advantages of the present exemplary embodiment will be explained as following.

In the present exemplary embodiment, in response to the request for resolving broadcast distribution means from the broadcast distribution data transmission and reception unit A221, the broadcast distribution means/range resolving unit A222 not only resolves the broadcast distribution means but also resolves the broadcast distribution range. At this occasion, the broadcast distribution means/range resolving unit A222 refers to the distribution policy setting table A223 and the hierarchical structure table A224. Then, when the broadcast distribution range is limited to within a particular cluster, the broadcast distribution data transmission and reception unit A221 performs the broadcast distribution in such a manner that the broadcast distribution range is limited to within the cluster on the basis of the broadcast distribution means and the broadcast distribution range resolved by the broadcast distribution means/range resolving unit A222.

By such a processing(s), the broadcast distribution means can be selectively used and the broadcast distribution range can be controlled in accordance with the type of the broadcast distribution data, the configured hierarchical structure, and the situation of the network, on the basis of the policy of the broadcast distribution.

According to the present exemplary embodiment, by appropriately setting the policy of the broadcast distribution, a different broadcast distribution range can be applied in accordance with the data type for which it is sufficient to perform the broadcast distribution to only the nodes in proximity and the data type for which the broadcast distribution is to be performed to the entire network. According to the present exemplary embodiment, the amount of traffic of the broadcast distribution can be reduced effectively.

The first advantages of the present exemplary embodiment is to be able to selectively use the broadcast distribution means in accordance with the type of the broadcast distribution data, the configured hierarchical structure, and the situation of the network, on the basis of the policy of the broadcast distribution.

The reason is that the broadcast distribution means resolving unit refers to the distribution policy setting table and the hierarchical structure table in response to the request for resolving broadcast distribution means from the broadcast distribution data transmission and reception unit, and resolves as to which of the tree-type distribution and the epidemic distribution is used to perform the broadcast distribution. Then, the resolution result is replied to the broadcast distribution data transmission and reception unit. Then, the broadcast distribution data transmission and reception unit uses the broadcast distribution means resolved by the broadcast distribution means resolving unit to perform the broadcast distribution.

The second advantages of the present exemplary embodiment is to be able to selectively use the broadcast distribution means and control the broadcast distribution range in accordance with the type of the broadcast distribution data, the configured hierarchical structure, and the situation of the network, on the basis of the policy of the broadcast distribution.

The reason for this is that, in the present exemplary embodiment, the broadcast distribution means resolving unit refers to the distribution policy setting table and the hierarchical structure table in response to the request for resolving broadcast distribution means from the broadcast distribution data transmission and reception unit, and not only resolves the broadcast distribution means but also resolves the broadcast distribution range. Then, in a case where the broadcast distribution range is limited to within a particular cluster, the broadcast distribution data transmission and reception unit performs the broadcast distribution in such a manner that the broadcast distribution range is limited to within the cluster, on the basis of the broadcast distribution means and the broadcast distribution range resolved by the broadcast distribution means resolving unit.

The network node explained above can be achieved by hardware, software, or a combination thereof. A distribution method performed by the network node explained above can be achieved by hardware, software, or a combination thereof. In this case, "achieved by software" means that it is achieved by causing a computer to read a program and to execute the program.

The program is stored using various types of non-transitory computer readable media, and can be provided to a computer. The non-transitory computer readable media include various types of tangible storage media. Examples of non-transitory computer readable media include magnetic recording media (for example, a flexible disk, a magnetic tape, and a hard disk drive), a magneto-optical recording medium (for example, a magneto-optical disk), a CD (Compact Disc)-ROM (Read Only Memory), a CD-R, a CD-R/W, a semiconductor memory (for example, a mask ROM, a PROM (Programmable ROM), an EPROM (Erasable PROM), a flash ROM, and a RAM (random access memory)). The program may be provided to a computer with various types of transitory computer readable media. Examples of transitory computer readable media include an electric signal, an optical signal, and an electromagnetic wave. The transitory computer readable medium can provide a program to a computer via a wire communication path such as an electric wire and an optical fiber, or a wireless communication path.

Some or all of the above exemplary embodiments may also be described in the following supplemental notes, but are not limited thereto.
(Supplemental note 1)
   A network node including:
   nonstructural distribution means for distributing data according to a nonstructural distribution in a network in which the nonstructural distribution can be performed;
   structure-type distribution means for distributing data according to a structure-type distribution using a link for the structure-type distribution established in the network; and
   selection means for selecting the structure-type distribution means or the nonstructural distribution means as broadcast distribution means by using a predetermined evaluation method,
   wherein the structure-type distribution means or the nonstructural distribution means selected as the broadcast distribution means by the selection means is used to distribute data in the network.
(Supplemental note 2)
   The network node according to supplemental note 1, characterized in that
   the structure-type distribution is a tree-type distribution using a plurality of hierarchies,
   the selection means selects the structure-type distribution means or the nonstructural distribution means as broadcast distribution means for each of a hierarchy to which an upper node belongs and a hierarchy to which a lower node belongs with respect to the network node, and
   the structure-type distribution means or the nonstructural distribution means selected by the selection means as the broadcast distribution means for each of the hierarchy to which the upper node belongs and the hierarchy to which the lower node belongs is used to distribute data to each of the hierarchy to which the upper node belongs and the hierarchy to which the lower node belongs.
(Supplemental note 3)
   The network node according to supplemental note 1, characterized in that
   the structure-type distribution is selected from the group consisting of a tree-type distribution, a loop-type distribution, and a broadcast distribution according to a distributed hash table.
(Supplemental note 4)
   The network node according to any one of supplemental notes 1 to 3, characterized in that
   the nonstructural distribution is selected from the group consisting of an epidemic distribution and a flood-type distribution.
(Supplemental note 5)
   The network node according to any one of supplemental notes 1 to 4, characterized in that
   the predetermined evaluation method includes any one of or a combination of two or more of an evaluation method according to evaluation criterion about an amount of traffic, an evaluation method according to evaluation criterion about a network state, and an evaluation method according to evaluation criterion about a content.
(Supplemental note 6)
   The network node according to supplemental note 5, characterized in that
   the evaluation criterion about the amount of traffic includes any one of or a combination of an evaluation criterion about a file size and a number of distribution destination nodes.
(Supplemental note 7)
   The network node according to supplemental note 5 or 6, characterized in that
   the evaluation according to the evaluation criterion about the network state includes any one of or a combination of two or more of an evaluation criterion about a degree of stability of a link, an evaluation criterion about a hierarchical level in which distribution can be performed, and an evaluation criterion about a bandwidth of the link.
(Supplemental note 8)
   The network node according to any one of supplemental notes 5 to 7, characterized in that
   the evaluation according to the evaluation criterion about the content includes any one of or a combination of two or more of an evaluation criterion about a degree of importance of a content, an evaluation criterion about a degree of emergency of a content, and an evaluation criterion about a degree of priority of a content.
(Supplemental note 9)
   The network node according to any one of supplemental notes 1 to 8, characterized by further including
   means for permitting or prohibiting execution of the distribution from the network node on the basis of information representing a range in which data are distributed.
(Supplemental note 10)
   The network node according to any one of supplemental notes 1 to 9, characterized by further including
   a first data holding unit for holding data with which the structure-type distribution means distributes data according to a structure-type distribution using a link for the structure-type distribution established in the network.
(Supplemental note 11)
   The network node according to any one of supplemental notes 1 to 10, characterized by further including
   a second data holding unit for holding data with which the selection means selects, as broadcast distribution means, the structure-type distribution means or the nonstructural distribution means by using a predetermined evaluation method.
(Supplemental note 12)
   A distribution method performed by a network node, including:
   a selection step of selecting, as broadcast distribution means, a structure-type distribution means for distributing data according to a nonstructural distribution in a network in which the nonstructural distribution can be performed by using a predetermined evaluation method and a nonstructural distribution means for distributing data according to a structure-type distribution using a link for the structure-type distribution established in the network; and
   a distribution step of distributing data in the network by using the structure-type distribution means or the nonstructural distribution means selected as the broadcast distribution means in the selection step.
(Supplemental note 13)
   The distribution method according to supplemental note 12, characterized in that
   the structure-type distribution is a tree-type distribution using a plurality of hierarchies,
   in the selection step, the structure-type distribution means or the nonstructural distribution means is selected as broadcast distribution means for each of a hierarchy to which an upper node belongs and a hierarchy to which a lower node belongs with respect to the network node, and
   the structure-type distribution means or the nonstructural distribution means selected in the selection step as the broadcast distribution means for each of the hierarchy to which the upper node belongs and the hierarchy to which the lower node belongs is used to distribute data to each of the hierarchy to which the upper node belongs and the hierarchy to which the lower node belongs.
(Supplemental note 14)
   The distribution method according to supplemental note 12, characterized in that
   the structure-type distribution is selected from the group consisting of a tree-type distribution, a loop-type distribution, and a broadcast distribution according to a distributed hash table.
(Supplemental note 15)
   The distribution method according to any one of supplemental notes 12 to 14, characterized in that
   the nonstructural distribution is selected from the group consisting of an epidemic distribution and a flood-type distribution.
(Supplemental note 16)
   The distribution method according to any one of supplemental notes 12 to 15, characterized in that
   the predetermined evaluation method includes any one of or a combination of two or more of an evaluation method according to evaluation criterion about an amount of traffic, an evaluation method according to evaluation criterion about a network state, and an evaluation method according to evaluation criterion about a content.
(Supplemental note 17)
   The distribution method according to supplemental note 16, characterized in that
   the evaluation criterion about the amount of traffic includes any one of or a combination of an evaluation criterion about a file size and a number of distribution destination nodes.
(Supplemental note 18)
   The distribution method according to supplemental note 16 or 17, characterized in that
   the evaluation according to the evaluation criterion about the network state includes any one of or a combination of two or more of an evaluation criterion about a degree of stability of a link, an evaluation criterion about a hierarchical level in which distribution can be performed, and an evaluation criterion about a bandwidth of the link.
(Supplemental note 19)
   The distribution method according to any one of supplemental notes 16 to 18, characterized in that
   the evaluation according to the evaluation criterion about the content includes any one of or a combination of two or more of an evaluation criterion about a degree of importance of a content, an evaluation criterion about a degree of emergency of a content, and an evaluation criterion about a degree of priority of a content.
(Supplemental note 20)
   The distribution method according to any one of supplemental notes 12 to 19, characterized by further including
   means for permitting or prohibiting execution of the distribution from the network node on the basis of information representing a range in which data are distributed.
(Supplemental note 21)
   The distribution method according to any one of supplemental notes 12 to 20, characterized by further including
   a first data holding step of holding data with which the structure-type distribution means distributes data according to a structure-type distribution using a link for the structure-type distribution established in the network.
(Supplemental note 22)
   The distribution method according to any one of supplemental notes 12 to 21, characterized by further including
   a second data holding step of holding data with which the structure-type distribution means or the nonstructural distribution means is selected as broadcast distribution means by using a predetermined evaluation method in the selection step.
(Supplemental note 23)
   A program for a network node that causes a computer to function as the network node, the program causing the computer to function as:
   nonstructural distribution means for distributing data according to a nonstructural distribution in a network in which the nonstructural distribution can be performed;
   structure-type distribution means for distributing data according to a structure-type distribution using a link for the structure-type distribution established in the network; and
   selection means for selecting the structure-type distribution means or the nonstructural distribution means as broadcast distribution means by using a predetermined evaluation method,
   wherein the network node distributes data in the network by using the structure-type distribution means or the nonstructural distribution means selected as the broadcast distribution means by the selection means.
(Supplemental note 24)
   The program for the network node according to supplemental note 23, characterized in that
   the structure-type distribution is a tree-type distribution using a plurality of hierarchies,
   the selection means selects the structure-type distribution means or the nonstructural distribution means as broadcast distribution means for each of a hierarchy to which an upper node belongs and a hierarchy to which a lower node belongs with respect to the network node, and
   the structure-type distribution means or the nonstructural distribution means selected by the selection means as the broadcast distribution means for each of the hierarchy to which the upper node belongs and the hierarchy to which the lower node belongs is used to distribute data to each of the hierarchy to which the upper node belongs and the hierarchy to which the lower node belongs.
(Supplemental note 25)
   The program for the network node according to supplemental note 23, characterized in that
   the structure-type distribution is selected from the group consisting of a tree-type distribution, a loop-type distribution, and a broadcast distribution according to a distributed hash table.
(Supplemental note 26)
   The program for the network node according to any one of supplemental notes 23 to 25, characterized in that
   the nonstructural distribution is selected from the group consisting of an epidemic distribution and a flood-type distribution.
(Supplemental note 27)
   The program for the network node according to any one of supplemental notes 23 to 26, characterized in that
   the predetermined evaluation method includes any one of or a combination of two or more of an evaluation method according to evaluation criterion about an amount of traffic, an evaluation method according to evaluation criterion about a network state, and an evaluation method according to evaluation criterion about a content.
(Supplemental note 28)
   The program for the network node according to supplemental note 27, characterized in that
   the evaluation criterion about the amount of traffic includes any one of or a combination of an evaluation criterion about a file size and a number of distribution destination nodes.
(Supplemental note 29)
   The program for the network node according to supplemental note 27or 28, characterized in that
   the evaluation according to the evaluation criterion about the network state includes any one of or a combination of two or more of an evaluation criterion about a degree of stability of a link, an evaluation criterion about a hierarchical level in which distribution can be performed, and an evaluation criterion about a bandwidth of the link.
(Supplemental note 30)
   The program for the network node according to any one of supplemental notes 27 to 29, characterized in that
   the evaluation according to the evaluation criterion about the content includes any one of or a combination of two or more of an evaluation criterion about a degree of importance of a content, an evaluation criterion about a degree of emergency of a content, and an evaluation criterion about a degree of priority of a content.
(Supplemental note 31)
   The program for the network node according to any one of supplemental notes 23 to 30, characterized by further causing the computer
   to function as means for permitting or prohibiting execution of the distribution from the network node on the basis of information representing a range in which data are distributed.
(Supplemental note 32)
   The program for the network node according to any one of supplemental notes 23 to 31, characterized by further causing the computer
   to function as a first data holding unit for holding data with which the structure-type distribution means distributes data according to a structure-type distribution using a link for the structure-type distribution established in the network.
(Supplemental note 33)
   The program for the network node according to any one of supplemental notes 23 to 32, characterized by further causing the computer
   to function as a second data holding unit for holding data with which the selection means selects, as broadcast distribution means, the structure-type distribution means or the nonstructural distribution means by using a predetermined evaluation method.
(Supplemental note 34)
   A network including a plurality of network nodes, characterized in that
   each of at least some of the network nodes is the network node according to any one of supplemental notes 1 to 11.

This application claims the priority based on Japanese Patent Application No. 2012-214172 filed on September 27, 2012, and the entire disclosure thereof is incorporated herein by reference.

### [Industrial Applicability]

The present invention can be used to distribute data in a network.

### [Reference signs List]

A1, A2, B1 to B12 Node
A11, A21 Application
A12, A22 Broadcast distribution control unit
A121, A221 Broadcast distribution data transmission and reception unit
A122 Broadcast distribution means resolving unit
A123, A223 Distribution policy setting table
A124, A224 Hierarchical structure table
A125, A225 Hierarchical structure configuration unit
A126, A226 Tree-type distribution unit
A127, A227 Epidemic distribution unit
A13, A23 TCP/IP unit
A222 Broadcast distribution means/range resolving unit
CL0-1 to CL0-4 Level zero cluster
CL1-1 to CL1-2 Level one cluster
CL2-1 Level two cluster
101 to 103, 301 Distribution policy setting table
201 Hierarchical structure table

## Claims

1. A network node **characterized by** comprising:
nonstructural distribution means for distributing data according to a nonstructural distribution in a network in which the nonstructural distribution can be performed;
structure-type distribution means for distributing data according to a structure-type distribution using a link for the structure-type distribution established in the network; and
selection means for selecting the structure-type distribution means or the nonstructural distribution means as broadcast distribution means by using a predetermined evaluation method,
wherein the structure-type distribution means or the nonstructural distribution means selected as the broadcast distribution means by the selection means is used to distribute data in the network.

2. The network node according to claim 1, **characterized in that**
the structure-type distribution is a tree-type distribution using a plurality of hierarchies,
the selection means selects the structure-type distribution means or the nonstructural distribution means as broadcast distribution means for each of a hierarchy to which an upper node, with respect to the own network node, belongs and a hierarchy to which a lower node, with respect to the own network node, belongs, and
the structure-type distribution means or the nonstructural distribution means selected by the selection means as the broadcast distribution means for each of the hierarchy to which the upper node belongs and the hierarchy to which the lower node belongs is used to distribute data to each of the hierarchy to which the upper node belongs and the hierarchy to which the lower node belongs.

3. The network node according to claim 1, **characterized in that**
the structure-type distribution is selected from the group consisting of a tree-type distribution, a loop-type distribution, and a broadcast distribution according to a distributed hash table.

4. The network node according to any one of claims 1 to 3, **characterized in that**
the nonstructural distribution is selected from the group consisting of an epidemic distribution and a flood-type distribution.

5. The network node according to any one of claims 1 to 4, **characterized in that**
the predetermined evaluation method includes any one of or a combination of two or more of an evaluation method according to an evaluation criterion about an amount of traffic, an evaluation method according to an evaluation criterion about a network state, and an evaluation method according to an evaluation criterion about a content.

6. The network node according to claim 5, **characterized in that**
the evaluation criterion about the amount of traffic includes any one of or a combination of an evaluation criterion about a file size and an evaluation criterion about a number of distribution destination nodes.

7. The network node according to claim 5 or 6, **characterized in that**
the evaluation according to the evaluation criterion about the network state includes any one of or a combination of two or more of an evaluation criterion about a degree of stability of a link, an evaluation criterion about a hierarchical level in which distribution can be performed, and an evaluation criterion about a bandwidth of the link.

8. The network node according to any one of claims 5 to 7, **characterized in that**
the evaluation according to the evaluation criterion about the content includes any one of or a combination of two or more of an evaluation criterion about a degree of importance of a content, an evaluation criterion about a degree of emergency of a content, and an evaluation criterion about a degree of priority of a content.

9. The network node according to any one of claims 1 to 8, **characterized in** further comprising
distribution range resolving means for permitting or prohibiting execution of the distribution from the own network node on the basis of information representing a range in which data are distributed.

10. The network node according to any one of claims 1 to 9, **characterized in** further comprising:
first data holding means for holding data with which the structure-type distribution means distributes data according to a structure-type distribution using a link for the structure-type distribution established in the network.

11. The network node according to any one of claims 1 to 10, **characterized in** further comprising:
second data holding means for holding data with which the selection means selects, as broadcast distribution means, the structure-type distribution means or the nonstructural distribution means by using a predetermined evaluation method.

12. A distribution method performed by a network node, comprising:
a selection step of selecting, by using a predetermined evaluation method, as broadcast distribution means, a structure-type distribution means for distributing data according to a nonstructural distribution in a network in which the nonstructural distribution can be performed or a nonstructural distribution means for distributing data according to a structure-type distribution using a link for the structure-type distribution established in the network; and
a distribution step of distributing data in the network by using the structure-type distribution means or the nonstructural distribution means selected as the broadcast distribution means in the selection step.

13. The distribution method according to claim 12, wherein
the structure-type distribution is a tree-type distribution using a plurality of hierarchies,
in the selection step, the structure-type distribution means or the nonstructural distribution means is selected as broadcast distribution means for each of a hierarchy to which an upper node, with respect to the own network node, belongs and a hierarchy to which a lower node, with respect to the own network node, belongs, and
the structure-type distribution means or the nonstructural distribution means selected in the selection step as the broadcast distribution means for each of the hierarchy to which the upper node belongs and the hierarchy to which the lower node belongs is used to distribute data to each of the hierarchy to which the upper node belongs and the hierarchy to which the lower node belongs.

14. The distribution method according to claim 12, wherein
the structure-type distribution is selected from the group consisting of a tree-type distribution, a loop-type distribution, and a broadcast distribution according to a distributed hash table.

15. The distribution method according to any one of claims 12 to 14, wherein
the nonstructural distribution is selected from the group consisting of an epidemic distribution and a flood-type distribution.

16. The distribution method according to any one of claims 12 to 15, wherein
the predetermined evaluation method includes any one of or a combination of two or more of an evaluation method according to an evaluation criterion about an amount of traffic, an evaluation method according to an evaluation criterion about a network state, and an evaluation method according to an evaluation criterion about a content.

17. The distribution method according to claim 16, wherein
the evaluation criterion about the amount of traffic includes any one of or a combination of an evaluation criterion about a file size and an evaluation criterion about a number of distribution destination nodes.

18. The distribution method according to claim 16 or 17, wherein
the evaluation according to the evaluation criterion about the network state includes any one of or a combination of two or more of an evaluation criterion about a degree of stability of a link, an evaluation criterion about a hierarchical level in which distribution can be performed, and an evaluation criterion about a bandwidth of the link.

19. The distribution method according to any one of claims 16 to 18, wherein
the evaluation according to the evaluation criterion about the content includes any one of or a combination of two or more of an evaluation criterion about a degree of importance of a content, an evaluation criterion about a degree of emergency of a content, and an evaluation criterion about a degree of priority of a content.

20. The distribution method according to any one of claims 12 to 19, further comprising:
a distribution range resolving step for permitting or prohibiting execution of the distribution from the network node on the basis of information representing a range in which data are distributed.

21. The distribution method according to any one of claims 12 to 20, further comprising:
a first data holding step of holding data with which the structure-type distribution means distributes data according to a structure-type distribution using a link for the structure-type distribution established in the network.

22. The distribution method according to any one of claims 12 to 21, further comprising:
a second data holding step for holding data with which the structure-type distribution means or the nonstructural distribution means is selected as broadcast distribution means by using a predetermined evaluation method in the selection step.

23. A computer program for a network node that causes a computer to function as the network node, the computer program causing the computer to function as:
nonstructural distribution means for distributing data according to a nonstructural distribution in a network in which the nonstructural distribution can be performed;
structure-type distribution means for distributing data according to a structure-type distribution using a link for the structure-type distribution established in the network; and
selection means for selecting the structure-type distribution means or the nonstructural distribution means as broadcast distribution means by using a predetermined evaluation method,
wherein the network node distributes data in the network by using the structure-type distribution means or the nonstructural distribution means selected as the broadcast distribution means by the selection means.

24. The computer program for the network node according to claim 23, **characterized in that**
the structure-type distribution is a tree-type distribution using a plurality of hierarchies,
the selection means selects the structure-type distribution means or the nonstructural distribution means as broadcast distribution means for each of a hierarchy to which an upper node, with respect to the own network node, belongs and a hierarchy to which a lower node, with respect to the own network node, belongs and
the structure-type distribution means or the nonstructural distribution means selected by the selection means as the broadcast distribution means for each of the hierarchy to which the upper node belongs and the hierarchy to which the lower node belongs is used to distribute data to each of the hierarchy to which the upper node belongs and the hierarchy to which the lower node belongs.

25. The computer program for the network node according to claim 23, **characterized in that**
the structure-type distribution is selected from the group consisting of a tree-type distribution, a loop-type distribution, and a broadcast distribution according to a distributed hash table.

26. The computer program for the network node according to any one of claims 23 to 25, **characterized in that** the nonstructural distribution is selected from the group consisting of an epidemic distribution and a flood-type distribution.

27. The computer program for the network node according to any one of claims 23 to 26, **characterized in that** the predetermined evaluation method includes any one of or a combination of two or more of an evaluation method according to an evaluation criterion about an amount of traffic, an evaluation method according to an evaluation criterion about a network state, and an evaluation method according to an evaluation criterion about a content.

28. The computer program for the network node according to claim 27, **characterized in that**
the evaluation criterion about the amount of traffic includes any one of or a combination of an evaluation criterion about a file size and an evaluation criterion about a number of distribution destination nodes.

29. The computer program for the network node according to claim 27 or 28, **characterized in that**
the evaluation according to the evaluation criterion about the network state includes any one of or a combination of two or more of an evaluation criterion about a degree of stability of a link, an evaluation criterion about a hierarchical level in which distribution can be performed, and an evaluation criterion about a bandwidth of the link.

30. The computer program for the network node according to any one of claims 27 to 29, **characterized in that** the evaluation according to the evaluation criterion about the content includes any one of or a combination of two or more of an evaluation criterion about a degree of importance of a content, an evaluation criterion about a degree of emergency of a content, and an evaluation criterion about a degree of priority of a content.

31. The computer program for the network node according to any one of claims 23 to 30, **characterized by** further causing the computer
to function as:
distribution range resolving means for permitting or prohibiting execution of the distribution from the network node on the basis of information representing a range in which data are distributed.

32. The computer program for the network node according to any one of claims 23 to 31, **characterized by** further causing the computer to function as:
first data holding means for holding data with which the structure-type distribution means distributes data according to a structure-type distribution using a link for the structure-type distribution established in the network.

33. The program for the network node according to any one of claims 23 to 32, **characterized by** further causing the computer to function as:
second data holding means for holding data with which the selection means selects, as broadcast distribution means, the structure-type distribution means or the nonstructural distribution means by using a predetermined evaluation method.

34. A network comprising a plurality of network nodes, **characterized in that**
each of at least some of the network nodes is the network node according to any one of claims 1 to 11.
